# EUROPÄISCHE PATENTANMELDUNG

(11) **EP 2 762 787 A2**
(43) Veröffentlichungstag der Anmeldung: **06.08.2014**
(21) Anmeldenummer: 14000351.8
(22) Anmeldetag: 30.01.2014
(51) Int. Cl.: F24D 3/16, F24F 5/00, F28F 1/00, B23K 20/10, B23K 26/00

(54) **Klimaelement für eine Heiz- und Kühldecke**

(30) Priorität: 31.01.2013 CH 3822013; 25.04.2013 CH 8662013
(71) Anmelder: Barcol-Air AG, 8603 Schwerzenbach (CH)
(72) Erfinder: Reetz, Ulrich, CH-8603 Schwerzenbach (CH); Hecker, Tomas, CH-8603 Schwerzenbach (CH)
(74) Vertreter: Wagner, Wolfgang Heribert

(57) **Zusammenfassung**

Ein von einem Wärmeträgermedium durchflossenes Rohr (3) und eine Lochplatte (1) sind zur Herstellung eines guten Wärmeübergangs verbunden, indem gerade Abschnitte des Rohres (3) jeweils längs einer mittels Ultraschall-Schweissens oder Laser-Schweissens hergestellten, dem Abschnitt folgenden Schweissnaht (5) mit einer Rückseite einer rechteckigen Grundplatte (4) aus Aluminiumblech verschweisst sind. Die Vorderseiten der Grundplatten (4) liegen auf der Rückseite der Lochplatte (1) auf und sind mit derselben ebenfalls längs mittels Ultraschall-Schweissens oder Laser-Schweissens hergestellter Schweissnähte (6), die beidseits der geraden Abschnitte des Rohres (3) parallel zu demselben verlaufen, verschweisst.

## Beschreibung

### Technisches Gebiet

Die Erfindung betrifft ein Klimaelement für eine Heiz- und Kühldecke, wie sie zum Heizen und vor allem zum Kühlen von Räumen eingesetzt werden.

### Stand der Technik

Bei gattungsgemässen Klimaelementen besteht die seit langer Zeit bekannte Aufgabe, das Rohr derart mit der Grundplatte zu verbinden, dass ein möglichst guter Wärmeübergang zwischen beiden gewährleistet ist. Zugleich soll die Verbindung flexibel an verschiedene durch die Geometrie und andere Anforderungen bestimmte Randbedingungen anpassbar und einfach herstellbar sein und keine grossen Kosten verursachen. Sie soll auch allfällige geräuschdämpfende Eigenschaften möglichst nicht beeinträchtigen. Wegen der langen Beschäftigung der Fachwelt mit der besagten Aufgabe wurden schon viele Lösungen vorgeschlagen.

So sind etwa EP 0 769 659 A1 Verbindungselemente zu entnehmen mit, an einer Rückseite, einem Kanal, der das Rohr aufnimmt und, an einer Vorderseite, einer ebenen Fläche, die zur Gänze oder teilweise mit der Rückseite der Lochplatte verklebt ist. Diese an sich bewährte Lösung ist aufwendig.

In EP 2 259 001 A1 wurde vorgeschlagen, das Rohr in einer Platte aus einem formbaren und zugleich gut wärmeleitenden Material wie Graphitschaum einzubetten. Abgesehen von den Schwierigkeiten der Herstellung weist ein solches Klimaelement nicht die gleiche mechanische Robustheit auf wie Klimaelemente, die aus Metall oder Kunststoff bestehen. Ausserdem ist der Wärmeübergang gegenüber Klimaelementen aus Metall in der Regel vermindert.

In WO 2011/128 118 A1 wurde vorgeschlagen, bei einem Sonnenkollektor ein Absorberblech mit einem Rohr zu verbinden, indem längs gerader Abschnitte des Rohres ein dasselbe bedeckender und an seiner Rückseite anliegender Blechstreifen jeweils beidseits des Rohres mit dem Absorberblech und fakultativ auch mit dem Rohr selbst Ultraschall-verschweisst wird.

### Darstellung der Erfindung

Der Erfindung liegt die Aufgabe zu Grunde, ein Klimaelement anzugeben, bei dem mit einfachen Mitteln ein sehr guter Wärmeübergang zwischen dem Rohr und der Grundplatte gewährleistet ist. Ausserdem soll es leicht und kostengünstig herstellbar sein.

Diese Aufgabe wird durch die Merkmale des Anspruchs 1 gelöst.

Erfindungsgemässe Klimaelemente sind sehr einfach aufgebaut und weisen hervorragende Wärmeübergangswerte auf. Wegen der weiten Verbreitung gattungsgemässer Klimaelemente und wegen der grossen Bedeutung des Wärmeübergangs für ihre Leistungsfähigkeit und Energieeffizienz sind die erzielten Verbesserungen von grossem wirtschaftlichen Wert.

### Kurze Beschreibung der Zeichnungen

Im folgenden wird die Erfindung anhand von Figuren, welche lediglich Ausführungsbeispiele darstellen, näher erläutert.
Es zeigen
- Fig. 1a: eine Draufsicht auf ein erfindungsgemässes Klimaelement gemäss einer ersten Ausführungsform,
- Fig. 1b: vergrössert einen Schnitt längs B-B in Fig. 1a,
- Fig. 2: ebenfalls vergrössert eine Unteransicht einer Komponente des erfindungsgemässen Klimaelements gemäss Fig. 1a,b,
- Fig. 3a: eine Draufsicht auf ein erfindungsgemässes Klimaelement gemäss einer zweiten Ausführungsform,
- Fig. 3b: vergrössert einen Schnitt längs B-B in Fig. 3a und
- Fig. 4: einen Schnitt entsprechend Fig. 3b durch eine abgewandelte Ausführung des Klimaelements gemäss der zweiten Ausführungsform.

### Wege zur Ausführung der Erfindung

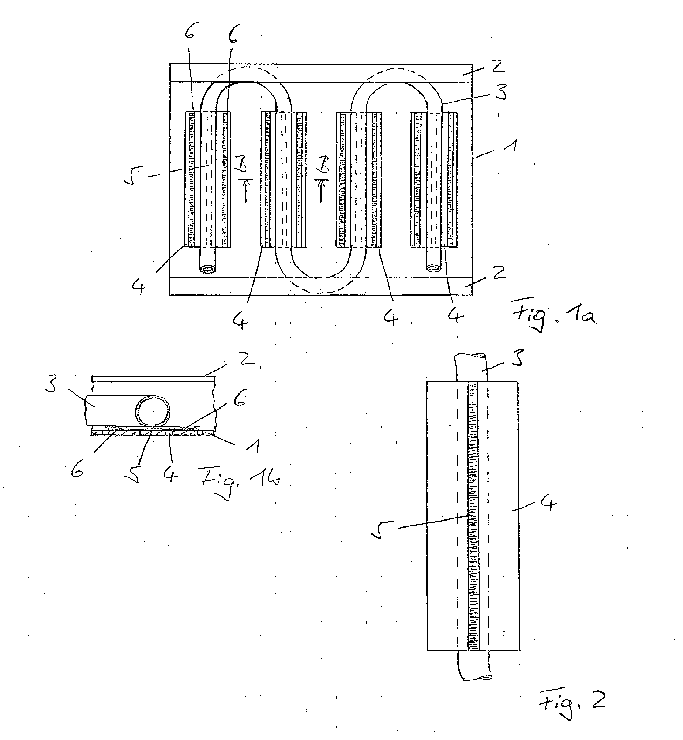

Das in den Figuren 1a,b dargestellte Klimaelement gemäss der ersten Ausführungsform weist eine ebene Frontplatte auf, welche als Lochplatte 1 ausgebildet ist mit zwei Flanschen 2, die zur Befestigung des Klimaelements dienen. Sie besteht aus Metall, vorzugsweise aus Aluminiumblech. Ein mäanderförmiges Rohr 3, das ebenfalls vorzugsweise aus Metall, insbesondere aus Kupfer oder Aluminium besteht, weist gerade Abschnitte auf, welche durch gebogene Abschnitte verbunden sind. Jeder der geraden Abschnitte liegt an einer Rückseite einer ebenen streifenförmigen, insbesondere rechteckigen Grundplatte 4 an, die ihrerseits auf einer ebenen Rückseite der Lochplatte 1 aufliegt und dort mit ihr verbunden sein kann. Das Rohr 3 wird beim Einsatz des Klimaelements von einem geheizten oder gekühlten Wärmeträgermedium durchflossen, gewöhnlich eine Flüssigkeit wie Wasser oder Sole.

Die Grundplatte 4 besteht vorzugsweise aus Blech, insbesondere Aluminiumblech, dessen Stärke nicht mehr als 1,2mm beträgt. Die Rückseite jeder Grundplatte 4 ist mit dem geraden Abschnitt des Rohres 3, dem sie zugeordnet ist, durch eine dem Rohr folgende durchgehende gerade Schweissnaht 5 direkt verbunden, wie am besten aus Fig. 2 ersichtlich ist.

Die Lochplatte 1 weist über ihre Fläche verteilte runde Oeffnungen auf, welche gewöhnlich einen Durchmesser von z.B. 1mm oder mehr haben. Die ebene Vorderseite jeder der Grundplatten 4 ist ebenfalls mittels mindestens einer Schweissnaht mit der Rückseite der Lochplatte 1 verbunden. Dabei sind vorzugsweise zwei durchgehende gerade Schweissnähte 6 beidseits neben dem geraden Abschnitt des Rohres 3 angeordnet und zu demselben parallel.

Die Schweissnähte 5, 6 sind vorzugsweise durchwegs durch Ultraschall-Schweissen hergestellt, z.B. wie in WO 2011/128 118 A1 beschrieben, doch können sie auch durch Laser-Schweissen hergestellt sein. Bei der Herstellung des Klimaelements werden zuerst die Grundplatten 4 auf den geraden Abschnitten des Rohres 3 provisorisch fixiert und dann wird mittels einer Sonotrode, die dem geraden Abschnitt gegenüber längs desselben über die Vorderseite der Grundplatte 4 geführt wird, jeweils die gerade Schweissnaht 5 angelegt (s. auch Fig. 2). Dann wird das Rohr 3 mit den angeschweissten Grundplatten 4 auf die Rückseite der Lochplatte 1 gelegt, ausgerichtet und mittels Sonotroden, die beidseits neben den geraden Abschnitten des Rohres 3 über die Rückseiten der Grundplatten 4 geführt werden, die Schweissnähte 6 angelegt und so die Grundplatten 4 mit der Lochplatte 1 verschweisst. Diese Art der Herstellung ist ausserordentlich einfach und wirtschaftlich und stellt einen sehr guten Wärmeübergang zwischen dem Rohr 3 und der Lochplatte 1 sicher.

Die an den Rückseiten der Grundplatten 4 sichtbaren Schweissnähte 6 sind vom zu klimatisierenden Raum abgewandt. Die an den Vorderseiten der Grundplatten 4 sichtbaren Schweissnähte 5, die andernfalls den ästhetischen Eindruck des Klimaelements beeinträchtigen könnten, sind ebenfalls vom Raum aus nicht sichtbar, da sie von der Lochplatte 1 verdeckt sind.

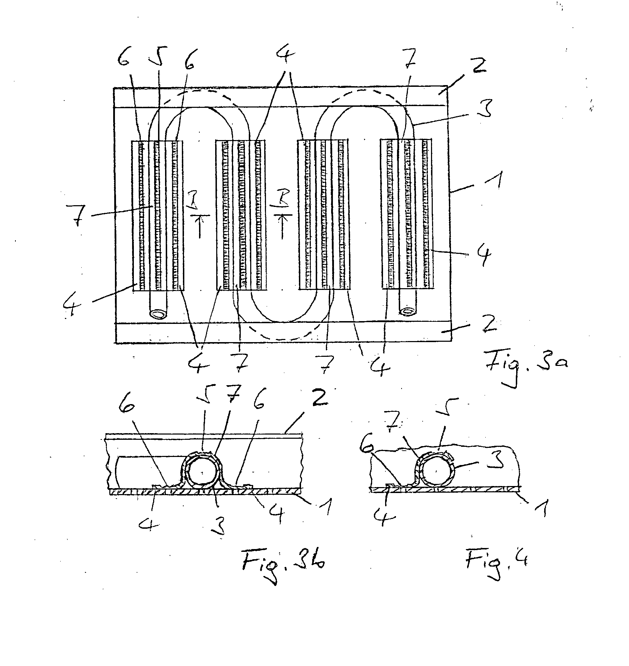

Das Klimaelement gemäss der in Fig. 3a,b dargestellten zweiten Ausführungsform entspricht in seinem Aufbau weitgehend dem Klimaelement gemäss der ersten Ausführungsform. Beidseits eines jeden der geraden Abschnitte des Rohres 3 ist jeweils eine streifenförmige Grundplatte 4 angeordnet. Die beiden Grundplatten 4 sind durch einen Verbindungsabschnitt 7 verbunden, welcher mit ihnen einstückig ist und an der von der Lochplatte 1 abgewandten Rückseite des geraden Abschnitts des Rohres 3 anliegt. Der Verbindungsabschnitt 7 ist längs einer Schweissnaht 5 mit dem geraden Abschnitt des Rohres 3 verbunden. Die ebene Vorderseite jeder der Grundplatten 4 ist ausserdem mit der Rückseite der Lochplatte 1 längs einer durchgehenden geraden Schweissnaht 6 verbunden. Die Verbindung zwischen dem Rohr 3 und den Grundplatten 4 ist in diesem Fall indirekt, über den Verbindungsabschnitt 7, aber ebenfalls durch eine Schweissnaht, die durchgehende gerade Schweissnaht 5, hergestellt, die durch Ultraschall-Schweissen oder auch durch Laser-Schweissen angelegt ist.

Bei der Herstellung kann ähnlich vorgegangen werden wie beim Klimaelement gemäss der ersten Ausführungsform, indem zuerst die Verbindungsabschnitte 7 mit den geraden Abschnitten des Rohres 3 verschweisst, d.h. die Schweissnähte 5 angelegt werden, und anschliessend die Grundplatten 4 mit der Lochplatte 1 verschweisst werden, indem die Schweissnähte 6 angelegt werden. Es ist aber auch möglich, zuerst das Rohr 3 und die Grundplatten 4 auf der Rückseite der Lochplatte 1 provisorisch zu fixieren und dann die Grundplatten 4 zuerst durch Anlegen der Schweissnähte 6 mit der Lochplatte 1 und dann durch Anlegen der Schweissnähte 5 die Verbindungsabschnitte 7 mit dem Rohr 3 zu verbinden.

Gemäss der abgewandelten Ausführung nach Fig. 4 ist lediglich an einer Seite des geraden Abschnittes des Rohres 3 eine Grundplatte 4 angeordnet. Der Verbindungsabschnitt 7 übergreift den geraden Abschnitt des Rohres 3 hakenartig. Er ist mittels einer durchgehenden geraden Schweissnaht 5 mit der Rückseite des Rohres 3, an der er anliegt, verbunden.

Hier können bei der Herstellung auch zuerst die Grundplatten 4 mit der Lochplatte 1 verschweisst und dann das Rohr 3 auf die Lochplatte 1 aufgelegt werden derart, dass die geraden Abschnitte neben den Verbindungsabschnitten 7 liegen und anschliessend so verschoben werden, dass die geraden Abschnitte unter die Verbindungsabschnitte 7 zu liegen kommen. Anschliessend können dann die Schweissnähte 5, welche die Verbindungsabschnitte 7 mit den geraden Abschnitten des Rohres 3 verbinden, angelegt werden.

Es sind verschiedene Abweichungen von den beschriebenen Ausführungsbeispielen möglich. So können die Grundplatten mit der Lochplatte statt verschweisst verklebt oder auf andere Weise verbunden oder nur aufgelegt sein. Es ist auch möglich, nur eine einzige mehr oder weniger durchgehende Grundplatte vorzusehen. Die Frontplatte kann auch ein Akustikvlies umfassen, das die Rückseite der Lochplatte vorzugsweise vollständig bedeckt und vorzugsweise mit ihr verklebt ist. Die Grundplatte liegt dann auf dem Akustikvlies auf und ist vorzugsweise mit ihm verklebt.

### Bezugszeichenliste

- 1: Lochplatte
- 2: Flansch
- 3: Rohr
- 4: Grundplatte
- 5: Schweissnaht
- 6: Schweissnaht
- 7: Verbindungsabschnitt

## Patentansprüche

1. Klimaelement für eine Heiz- und Kühldecke, welches eine eine Lochplatte (1) umfassende Frontplatte mit einer ebenen Rückseite umfasst sowie mindestens eine Grundplatte (4) mit einer ebenen Vorderseite, welche auf der Rückseite der Frontplatte aufliegt und mindestens ein Rohr (3), welches mit der Grundplatte (4) verbunden ist, **dadurch gekennzeichnet, dass** die Verbindung zwischen der mindestens einen Grundplatte (4) und dem mindestens einen Rohr (3) durch Ultraschall-Verschweissung oder Laser-Verschweissung hergestellt ist.

2. Klimaelement nach Anspruch 1, **dadurch gekennzeichnet, dass** die Verbindung des Rohres (3) mit der Grundplatte (4) die Form einer sich längs des Rohres (3) erstreckenden Schweissnaht (5) hat.

3. Klimaelement nach Anspruch 1 oder 2, **dadurch gekennzeichnet, dass** das Rohr (3) mehrere durch gebogene Abschnitte verbundene gerade Abschnitte aufweist und jedem geraden Abschnitt mindestens eine dort mit dem Rohr (3) verbundene Grundplatte (4) zugeordnet ist.

4. Klimaelement nach Anspruch 3, **dadurch gekennzeichnet, dass** die Grundplatten (4) jeweils streifenförmig ausgebildet sind.

5. Klimaelement nach einem der Ansprüche 1 bis 4, **dadurch gekennzeichnet, dass** die Rückseite der mindestens einen Grundplatte (4) mit der der Lochplatte (1) zugewandten Vorderseite des Rohres (3) verschweisst ist.

6. Klimaelement nach einem der Ansprüche 1 bis 4, **dadurch gekennzeichnet, dass** neben dem mindestens einen Rohr (3) oder einem Abschnitt desselben auf einer ersten Seite eine Grundplatte (4) angeordnet ist und ein mit der Grundplatte (4) einstückiger Verbindungsabschnitt (7) vorgesehen ist, der mit einer von der Lochplatte (1) abgewandten Rückseite des Rohres (3) verschweisst ist.

7. Klimaelement nach Anspruch 6, **dadurch gekennzeichnet, dass** neben dem Rohr (3) oder dem Abschnitt desselben auf einer zweiten Seite eine weitere Grundplatte (4) angeordnet ist und der Verbindungsabschnitt (7) mit der weiteren Grundplatte (4) ebenfalls einstückig ist.

8. Klimaelement nach einem der Ansprüche 1 bis 7, **dadurch gekennzeichnet, dass** die mindestens eine Grundplatte (4) mit der Lochplatte (1) der Frontplatte ebenfalls durch Ultraschall-Verschweissung oder Laser-Verschweissung verbunden ist.

9. Klimaelement nach Anspruch 8, **dadurch gekennzeichnet, dass** die Ultraschall-Verschweissung oder Laser-Verschweissung der Grundplatte (4) mit der Lochplatte (1) jeweils die Form mindestens einer sich längs des Rohres (3) erstreckenden Schweissnaht (6) hat.

10. Klimaelement nach einem der Ansprüche 1 bis 7, **dadurch gekennzeichnet, dass** die Frontplatte ein die Rückseite der Lochplatte (1) bedeckendes Akustikvlies umfasst, auf welchem die mindestens eine Grundplatte (4) aufliegt.

11. Klimaelement nach Anspruchs 10, **dadurch gekennzeichnet, dass** das Akustikvlies mit der Rückseite der Lochplatte (1) verklebt ist.

12. Klimaelement nach Anspruch 10 oder 11, **dadurch gekennzeichnet, dass** die mindestens eine Grundplatte (4) mit dem Akustikvlies verklebt ist.
